# EUROPÄISCHE PATENTANMELDUNG

(11) **EP 3 952 044 A1**
(43) Veröffentlichungstag der Anmeldung: **09.02.2022**
(21) Anmeldenummer: 20189383.1
(22) Anmeldetag: 04.08.2020
(51) Int. Cl.: H02G 3/06, H02G 3/08, F16L 25/00, F16L 25/14, H02G 3/22

(54) **VERWENDUNG EINES ANSCHLUSSSTÜCKS**

(71) Anmelder: Hauff-Technik GmbH & Co. KG, 89568 Hermaringen (DE)
(72) Erfinder: NGOC HOANG, Anh Pham, 89520 Heidenheim (DE); HUG, Christian, 89518 Heidenheim (DE)
(74) Vertreter: König Szynka Tilmann von Renesse Patentanwälte Partnerschaft mbB

(57) **Zusammenfassung**

Die Erfindung betrifft eine Verwendung eines Anschlussstücks (1), welches ein Hülselement (2) und ein im Vergleich zu dem Hülselement (2) weicheres Dichtelement (3) aufweist, wobei das Dichtelement (3) eine Öffnung (4) begrenzt und eine Tülle (3.1) bildet, bei welcher Verwendung ein Rohr (5) und eine Leitung (30), die einen im Vergleich zu dem Rohr (5) kleineren Außendurchmesser hat, über das Anschlussstück (1) zusammengesetzt werden, wozu ein Ende (5.1) des Rohres (5) in die Öffnung (4) des Dichtelements (3) eingeschoben wird und die Leitung (30) in die Tülle (3.1) des Dichtelements (3) eingeschoben wird, wobei das Hülselement (2) das Dichtelement (3), in dem das Ende (5.1) des Rohres (5) und die Leitung (30) angeordnet sind, in Richtungen senkrecht zu einer Längsachse (4.1) der Öffnung (4) nach außen einfasst.

## Beschreibung

Die vorliegende Erfindung betrifft die Verwendung eines Anschlussstücks zusammen mit einem Rohr.

Der vorliegenden Erfindung liegt das technische Problem zugrunde, eine vorteilhafte Verwendung eines Anschlussstücks bzw. ein vorteilhaftes Anschlussstück als Gegenstand der Verwendung anzugeben.

Dies wird erfindungsgemäß mit dem Anschlussstück und dessen Verwendung nach Anspruch 1 gelöst. Das Anschlussstück weist ein Hülselement und ein im Vergleich dazu weicheres Dichtelement auf. Zusätzlich zu einer Öffnung, in die ein Ende des Rohres eingeschoben wird, bildet das Dichtelement eine Tülle. In diese wird im Zuge der Verwendung eine Leitung eingeschoben, die einen verglichen mit dem Rohr kleineren Außendurchmesser hat.

Jedenfalls im fertig zusammengesetzten Zustand, wenn also das Rohr und die Leitung in dem Dichtelement angeordnet sind, fasst das Hülselement das Dichtelement nach außen ein. Dies bezieht sich auf die Richtungen senkrecht zu einer Längsachse der Öffnung (auch als Radialrichtungen bezeichnet), in diesen ist das Hülselement auf das Dichtelement folgend angeordnet. Das im Vergleich zum Dichtelement härtere Hülselement, welches das Dichtelement zumindest über einen Axialabschnitt nach außen einfasst (nicht zwingend über die gesamte axiale Länge des Dichtelements), schafft Stabilität. Es kann bspw. den Halt des Dichtelements auf dem Rohr und/oder der Leitung verbessern.

Bevorzugte Ausgestaltungen sind Gegenstand der abhängigen Ansprüche sowie der gesamten Offenbarung, wobei bei der Darstellung der Merkmale nicht immer im Einzelnen zwischen Verwendungs- bzw. Verfahrens- oder Vorrichtungsaspekten unterschieden wird; jedenfalls implizit ist die Offenbarung hinsichtlich sämtlicher Anspruchskategorien zu lesen. Es soll insbesondere, wenn von einer bestimmten Verwendung die Rede ist, zugleich immer auch ein entsprechendes Verfahren, insbesondere Arbeitsverfahren offenbart sein.

In dem Bereich bzw. Abschnitt der Tülle verjüngt sich das Dichtelement, hat es also bspw. einen im Vergleich zu dem die Öffnung bildenden Abschnitt kleineren Außendurchmesser. Der Außendurchmesser kann über die Tülle hinweg, also in axialer Richtung, zu deren freien Ende hin abnehmen. Auch unabhängig davon kann das freie Ende der Tülle im Ausgangszustand, vor dem Einschieben der Leitung, verschlossen sein, z. B. mit einer monolithisch angeformten Membran oder einem eingesetzten Stopfen. Vor oder auch mit dem Einschieben der Leitung kann ein solcher Stopfen ausgestoßen oder die Membran aufgerissen werden. Alternativ kann die Tülle auch bereits im Ausgangszustand eine Durchlassöffnung bilden.

Gemäß einer bevorzugten Ausführungsform weist die Tülle von dem in die Öffnung eingeschobenen Rohr weg. In anderen Worten bildet das Dichtelement an einem axialen Ende die Öffnung und erstreckt sich die Tülle von diesem Ende weg, axial entgegengesetzt zu ihrem freien Ende hin. Eine entsprechende Orientierung liegt dann jedenfalls im fertig montierten Zustand vor, während der Montage kann die Tülle bspw. auch zeitweilig in die andere Richtung zeigen. Es kann also z. B. das Rohr in einer ersten Einschieberichtung in die Öffnung eingeschoben werden und kann die Leitung in einer zweiten, axial entgegengesetzten Richtung in die Tülle eingeschoben werden. Dabei kann die Tülle, durch das Einschieben der Leitung, zeitweilig eingestülpt werden, wobei sie durch einen Zug an der Leitung nach dem Einschieben wieder in ihre ursprüngliche Orientierung gebracht werden kann. Alternativ lässt sich ein solches Einstülpen bspw. auch vermeiden, wenn beim Einschieben der Leitung in der zweiten Einschieberichtung die Tülle temporär geweitet wird, bspw. mit einem Spreizwerkzeug. Weiterhin alternativ kann die Leitung auch in der ersten Einschieberichtung eingeschoben werden, bspw. vor dem Einschieben des Rohres oder durch das eingeschobene Rohr hindurch.

Generell ist das Dichtelement und insbesondere die Tülle bevorzugt aus einem Elastomermaterial vorgesehen. Das "Elastomermaterial" kann ganz allgemein ein Kunststoff mit elastischem Verhalten sein. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer. Das Dichtelement ist weicher als das Hülselement, hat also eine geringere Shore-Härte.

Aufgrund der elastischen Materialeigenschaften legt sich die Tülle beim Einschieben der Leitung selbsttätig an deren Außenwandfläche an. Bevorzugt wird die Tülle auch im fertig montierten Zustand allein aufgrund der elastischen Materialeigenschaften dicht auf der Leitung gehalten, wird sie also nicht zusätzlich von außen angedrückt. Es ist also bspw. keine Spannschelle auf der Tülle angeordnet, in anderen Worten ist ihre Außenwandfläche bevorzugt frei. Neben der vereinfachten Montage kann dies bspw. auch eine gewisse Relativverkippbarkeit zwischen Rohr und Leitung ermöglichen, was z. B. Beschädigungen vorbeugen kann. Generell kann die Tülle bevorzugt eine nach innen hervortretende Erhebung bilden, die sich bspw. formschlüssig in eine Vertiefung legen kann, wenn die Leitung eine gewellte Außenwandfläche hat.

Gemäß einer bevorzugten Ausführungsform hat das Rohr zumindest abschnittsweise eine gewellte Außenfläche. Die Wellung ist in einer die Rohrachse beinhaltenden Schnittebene betrachtet ausgebildet, also in Form von axial aufeinanderfolgenden Erhebungen und Vertiefungen. Im Allgemeinen kann es sich bei dem Rohr auch um ein Spiralrohr mit helixförmig umlaufender Erhebung bzw. Vertiefung handeln, bevorzugt ist ein Wellrohr. Bei diesem können die axial abwechselnd aufeinanderfolgenden Erhebungen und Vertiefungen jeweils in sich geschlossen sein (in Umlaufrichtung). Unabhängig von diesen Details kann ein Rohr mit gewellter Außenwandfläche vorliegend bspw. aufgrund seiner Flexibilität von Vorteil sein, es kann bspw. die Leitung in dem Rohr mit einer gewissen Krümmung geführt sein und die flexible Tülle am Übergangs- bzw. Austrittspunkt der Leitung diesem Krümmungsradius folgen.

In bevorzugter Ausgestaltung sitzt das Dichtelement und/oder das Hülselement axial formschlüssig auf dem Rohr. Dazu kann das Hülselement und/oder das Dichtelement eine nach innen hervortretende Erhebung bilden, die in eine Vertiefung der gewellten Außenwandfläche des Rohres eingreift. Bevorzugt ist jedenfalls das Hülselement mit einer entsprechenden Erhebung ausgestattet, die bspw. axial endseitig als einwärts gerichteter Kragen vorgesehen sein kann. Diese und die nachstehend geschilderten Ausführungsformen (Trennfuge im Hülselement, Klappen zur Montage etc.) sollen dabei auch unabhängig von dem hauptanspruchsgemäßen Dichtelement mit Dichttülle offenbart sein, können also ganz allgemein in Verbindung mit einem Dichtelement von Interesse sein, über das ein Rohr und eine Leitung zusammengesetzt werden.

Gemäß einer bevorzugten Ausführungsform ist das Hülselement mit einer Trennfuge ausgestattet, die zeitweilig geweitet wird, um das Hülselement auf dem Rohr zu platzieren. Im Allgemeinen kann es auch eine zweite Trennfuge geben, kann das Hülselement also bspw. zweigeteilt sein und auf dem Dichtelement mit dem eingeschobenen Rohr zusammengesetzt werden, etwa zusammengeclipst. Bevorzugt ist das Hülselement jedoch für sich einstückig, wird es also beim Weiten der Trennfuge auf- und beim Schließen der Trennfuge zugeklappt. Um diese Klappbarkeit zu unterstützen, kann es in Ergänzung zu der Trennfuge scharnierartig ausgeführt sein, vorzugsweise als für sich zusammenhängendes Teil mit einem Filmscharnier ausgestattet sein. Dieses kann bspw. der Trennfuge radial entgegengesetzt angeordnet sein.

Generell ist das Hülselement bevorzugt aus einem Kunststoffmaterial vorgesehen, insbesondere aus einem Hartkunststoff, bspw. ABS oder PP. Das Hülselement kann bevorzugt ein Spritzgussteil sein.

Im Allgemeinen ließe sich der vorstehend geschilderte, axial formschlüssige Sitz in einer Vertiefung der gewellten Außenwandfläche des Rohres bspw. auch mit einem entsprechend elastischen Hülselement und/oder Rohr erreichen. Bevorzugt ist jedoch die Kombination aus Trennfuge und axial formschlüssigem Sitz (in Kombination mit oder auch unabhängig von der hauptanspruchsgemäßen Dichttülle). Dies kann bspw. die Montage vereinfachen bzw. einen zuverlässigen Sitz auf dem Rohr schaffen. Generell ist das Dichtelement bevorzugt umlaufend in sich geschlossen, also unterbrechungsfrei durchgehend ausgebildet, insbesondere auch bei den Kombinationen mit dem geteilten Hülselement.

Generell sind das Dicht- und das Hülselement bevorzugt mehrteilig zueinander, also separat handhabbar (i. A. wäre hingegen z. B. auch ein 2K-Spritzgussteil möglich). In bevorzugter Ausgestaltung wird zuerst das Rohr in das Dichtelement eingeschoben und wird danach das Hülselement platziert. Dies kann generell, auch unabhängig von dem Formschluss, einen gewissen Halt schaffen, weil das Dichtelement gut gespannt bzw. leicht geweitet auf dem eingeschobenen Rohr sitzt. Damit kann auch das Dichtelement dem Hülselement einen gewissen Halt geben.

In bevorzugter Ausgestaltung ist das Dichtelement in dem aufgesetzten Hülselement axial eingefasst. Bevorzugt begrenzt das Hülselement in axial beide Richtungen und auch nach außen ein Volumen, in dem im montierten Zustand das Dichtelement angeordnet ist. Dies kann auch einen gewissen Schutz des Dichtelements darstellen, bspw. vor Insektenfraß.

Besonders bevorzugt wird das Platzieren des Hülselements auf dem Dichtelement nach dem Einschieben des Rohres mit dem formschlüssigen Eingriff des Hülselements in die Außenwandfläche des Rohres kombiniert. Mit dem Aufsetzen des Hülselements wird einerseits dessen Eingriff in die gewellte Außenwandfläche des Rohres geschaffen und andererseits das Dichtelement umschlossen. Die Leitung kann beim Aufsetzen des Hülselements bereits in dem Dichteelement, insbesondere in der Tülle angeordnet sein oder auch erst nachträglich hindurchgeführt werden. Insofern kann das Dichtelement mit Tülle auch eine gewisse Variabilität im Ablauf eröffnen.

Gemäß einer bevorzugten Ausführungsform wird das Anschlussstück an einer Gehäusewand montiert, insbesondere in ein Loch in der Gehäusewand eingesetzt. Das Rohr kann sich dann auf einer Seite zu der Gehäusewand hin erstrecken, vorzugsweise gehäuseaußenseitig. Die Leitung erstreckt sich dann im Gehäuseinnenraum, sie kann bei dem Anschlussstück beginnen oder sich gehäuseaußenseitig in dem Rohr erstrecken und durch das Dichtelement hindurch in den Gehäuseraum hinein verlaufen.

Besonders vorteilhaft und entsprechend bevorzugt kann eine Anwendung des Anschlussstücks bei einem Gehäuse sein, dass im Erdreich verbaut wird oder ist. Gehäuseaußenseitig verläuft das Rohr dann also im Erdreich. Letzteres, also das Bodenmaterial, grenzt gehäuseaußenseitig an die Gehäusewand, und umgekehrt hält das Gehäuse im Erdreich einen Gehäuseinnenraum frei. Dieser kann bspw. als Zugangspunkt genutzt werden, bspw. bei einer Datenkabelanbindung oder - erschließung. Im Kontext eines solchen ins Erdreich eingebauten Gehäuses kann das Anschlussstück bspw. wegen der schnellen, dabei aber zuverlässigen Montierbarkeit von Vorteil sein, weil die Erdarbeiten oftmals unter Zeitdruck erfolgen und die Anschlussstelle andererseits nach Herstellung des Bodenaufbaus nicht mehr zugänglich ist.

Das Einsetzen des Anschlussstücks und damit vorzugsweise des Hülselements kann bspw. auch dahingehend von Vorteil sein, dass dann auch ein geteiltes bzw. aufklappbares Hülselement von der Gehäusewand zuverlässig zusammengehalten ist. Mit dem axialen Einschieben des Hülselements in das Loch wird also in anderen Worten eine Arretierung von dessen Aufklappbarkeit geschaffen. Die Gehäusewand hält das Hülselement geschlossen. Zusammengefasst kann somit bspw. das nachträglich aufgesetzte Hülselement das Rohr und/oder das Dichtelement axial formschlüssig halten, wobei das zum Aufheben dieses axialen Formschlusses notwendige Aufklappen des Hülselements durch die Gehäusewand, also die Laibung des Lochs blockiert wird.

In bevorzugter Ausgestaltung verrastet das eingeschobene Hülselement in dem Loch. Dazu kann es bspw. eine oder umlaufend verteilt auch mehrere Rastnasen geben. Eine solche Rastnase kann beim Einschieben des Hülselements entlang einer flachen Flanke an einer Wandfläche der Gehäusewand bzw. Mündung der Öffnung gleiten, um dann bei Erreichen des Rastsitzes mit einer steilen Flanke an der entgegengesetzten Wandfläche der Gehäusewand anzuliegen. Bevorzugt ist das eingesetzte Hülselement nicht nur axial formschlüssig, sondern auch verdrehsicher in dem Loch gehalten. Dazu kann einer oder können umlaufend verteilt mehrere sich axial erstreckende Stege vorgesehen sein, wobei ein solcher Steg in eine entsprechende Ausbuchtung der Gehäusewand eingreift. Besonders bevorzugt kann eine Ausgestaltung dahingehend sein, dass eine jeweilige Rastnase auf einem jeweiligen Steg angeordnet ist.

Gemäß einer bevorzugten Ausführungsform ist die Leitung, an deren Außenwandfläche sich die Tülle anlegt, ebenfalls ein Rohr. Mit dem Anschlussstück können bzw. werden also insofern zwei Rohre unterschiedlichen Durchmessers miteinander verbunden. Im Falle der Gehäusewand kann bspw. das Rohr mit größerem Außendurchmesser gehäuseaußenseitig und jenes mit kleinerem Außendurchmesser gehäuseinnenseitig verlaufen.

Bei einer alternativ bevorzugten Ausführungsform ist die Leitung, an welche sich die Tülle anlegt, ein Kabel, insbesondere ein Datenkabel, vorzugsweise ein Glasfaserkabel. Ein solches kann besonders bruchempfindlich sein, weswegen umgekehrt die sich flexibel anlegende Tülle von Vorteil sein kann. Das Daten- bzw. Glasfaserkabel kann um den eigentlichen Kabelkern (die Glasfaser) einen Kabelmantel aufweisen, an Letzteren legt sich die Tülle des Dichtelement an.

Das Verlegen eines Daten- bzw. Glasfaserkabels in dem Rohr kann auch dann von Interesse sein, wenn die "Leitung" ein weiteres Rohr ist. Im Unterschied zu der im vorherigen Absatz beschriebenen Variante tritt dann das Datenkabel am Anschlussstück nicht aus, sondern ist es von dort ab in dem weiteren Rohr geführt.

Unabhängig von der Ausgestaltung als Kabel oder Rohr ist eine nicht zu große Leitung bevorzugt, kann deren Außendurchmesser also bspw. bei höchstens 5 cm, 4 cm, 3 cm, 2 cm bzw. 1 cm liegen (mit möglichen Untergrenzen bei z. B. mindestens 1 mm, 2 mm bzw. 5 mm).

Die Erfindung betrifft auch eine Anschlussstückanordnung gemäß Anspruch 13.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Rohr mit aufgesetztem Dichtelement und einem Hülselement, während Letzteres platziert wird;
- Figur 2: auf die Situation gemäß Figur 1 folgend das das Dichtelement und Rohrende umschließende Hülselement;
- Figur 3: das Rohrelement mit aufgesetztem Dichtelement, durch dessen Tülle zusätzlich eine Leitung verlegt wurde;
- Figur 4: das Anschlussstück mit Rohr und Leitung, eingesetzt in eine Gehäusewand.

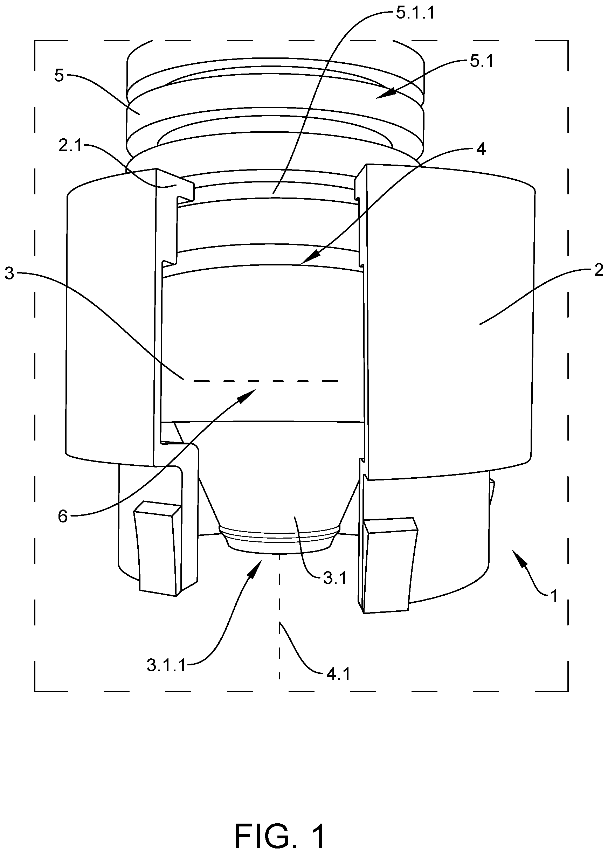

Figur 1 zeigt ein Anschlussstück 1, welches ein Hülselement 2 und ein Dichtelement 3 aufweist. An seinem einen Ende bildet das Dichtelement 3 eine Öffnung 4, in diese ist vorliegend bereits ein Rohr 5 eingeschoben. Dessen Ende 6 liegt in dem Dichtelement 3. An seinem bezogen auf eine Längsachse 4.1 der Öffnung 4 axial entgegengesetzten Ende bildet das Dichtelement 3 eine Tülle 3.1. Zu deren freien Ende 3.1.1 hin nimmt der Außendurchmesser des Dichtelements 3 ab. Wie nachstehend im Detail erläutert, dient die Tülle 3.1 dem Anschließen einer Leitung.

Das Hülselement 2 weist eine nach innen hervortretende Erhebung 2.1 auf, die vorliegend als axial endseitiger Kragen ausgebildet ist. Das Rohr 5 hat eine gewellte Außenwandfläche 5.1, vorliegend ist es als Spiralrohr ausgebildet. Das Hülselement 2 wird derart auf dem Rohr 5 platziert, dass sich die Erhebung 2.1 in eine Vertiefung 5.1.1 der gewellten Außenwandfläche 5.1 legt, also ein axialer Formschluss geschaffen wird. Dazu wird das Hülselement 2 aufgeklappt und auf dem Dichtelement 3 mit dem eingeschobenen Rohr 5 platziert.

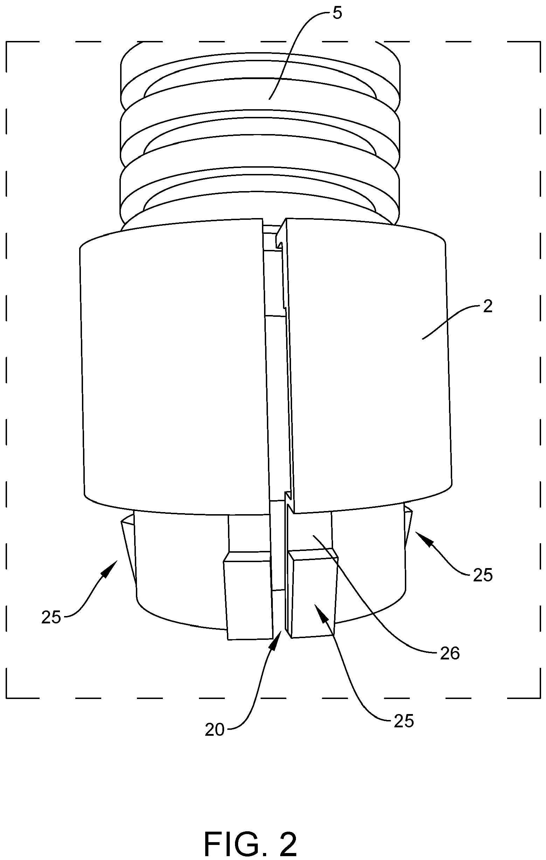

Figur 2 illustriert dies auf die Situation gemäß Figur 1 folgend, das Hülselement 2 sitzt geschlossen auf dem Rohr 5 und dem Dichtelement 3. Wie aus der Zusammenschau mit Figur 1 ersichtlich, ist dann nicht nur die Erhebung 2.1 formschlüssig in der Vertiefung 5.1.1 platziert, sondern schließt das Hülselement 2 auch das Dichtelement 3 axial und radial ein. In Figur 2 ist die dieses Aufklappen ermöglichende Trennfuge 20 des Hülselements 2 zu erkennen, in der Abbildung rückseitig (nicht zu erkennen) ist das Hülselement mit einem Filmscharnier geformt. Dieses verläuft wie die Trennfuge 20 axial und erlaubt als Bereich verringerter Wandstärke das Aufklappen.

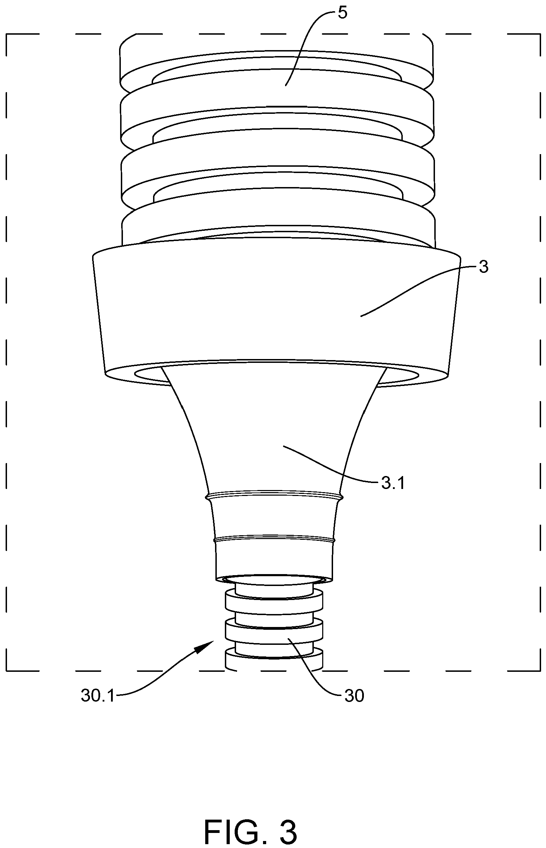

Figur 3 zeigt das Rohr 5 mit dem aufgesetzten Dichtelement 3 ohne Hülselement 2. Durch die Tülle 3.1 des Dichtelements 3 wurde eine Leitung 30 verlegt. Die Tülle 3.1 legt sich aufgrund der elastischen Materialeigenschaften selbsttätig an die Außenwandfläche 30.1 der Leitung an, die vorliegend ebenfalls als Wellrohr ausgeführt ist. Die Leitung 30 kann, wie in Figur 3 dargestellt, vor dem Platzieren des Hülselements 2 eingeschoben werden, oder auch danach.

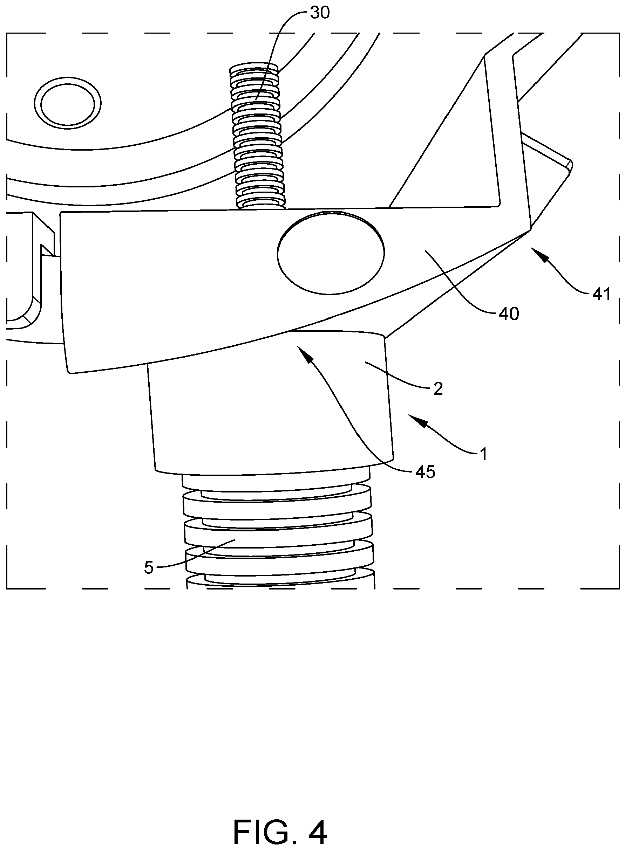

Figur 4 zeigt das Anschlussstück 1 mit Rohr 5 und Leitung 30, montiert an einer Wand 40 eines Gehäuses 41. Das Hülselement 2 ist in ein Loch 45 in der Wand 40 eingeschoben. Es wird von den in Figur 2 zu erkennenden Rastnasen 25 axial formschlüssig und von den Stegen 26 verdrehsicher darin gehalten.

## Patentansprüche

1. Verwendung eines Anschlussstücks (1), welches
ein Hülselement (2) und
ein im Vergleich zu dem Hülselement (2) weicheres Dichtelement (3) aufweist,
wobei das Dichtelement (3) eine Öffnung (4) begrenzt und eine Tülle (3.1) bildet,
bei welcher Verwendung ein Rohr (5) und eine Leitung (30), die einen im Vergleich zu dem Rohr (5) kleineren Außendurchmesser hat, über das Anschlussstück (1) zusammengesetzt werden,
wozu ein Ende (5.1) des Rohres (5) in die Öffnung (4) des Dichtelements (3) eingeschoben wird und die Leitung (30) in die Tülle (3.1) des Dichtelements (3) eingeschoben wird,
wobei das Hülselement (2) das Dichtelement (3), in dem das Ende (5.1) des Rohres (5) und die Leitung (30) angeordnet sind, in Richtungen senkrecht zu einer Längsachse (4.1) der Öffnung (4) nach außen einfasst.

2. Verwendung nach Anspruch 1, bei welcher sich die Tülle (3.1) in einer Richtung zu ihrem freien Ende (3.1.1) hin erstreckt, welche von dem in die Öffnung (4) eingeschobenen Rohr (5) weg weist.

3. Verwendung nach Anspruch 1 oder 2, bei welcher das Rohr (5) zumindest abschnittsweise eine gewellte Außenwandfläche (5.1) hat.

4. Verwendung nach Anspruch 3, bei welcher das Hülselement (2) und/oder das Dichtelement (3) eine nach innen zu der Längsachse (4.1) der Öffnung (4) hervortretende Erhebung (2.1) bildet, die axial formschlüssig in eine Vertiefung (5.1.1) der gewellten Außenwandfläche eingreift.

5. Verwendung nach einem der vorstehenden Ansprüche, bei welcher das Hülselement (2) eine Trennfuge (20) aufweist, die zeitweilig geweitet wird, wenn das Hülselement (2) auf dem Rohr (5) platziert wird.

6. Verwendung nach Anspruch 5, bei welcher zuerst das Ende (5.1) des Rohres (5) in die Öffnung (4) des Dichtelements (3) eingeschoben wird und danach das Hülselement (2) auf dem Rohr (5) und dem Dichtelement (3) platziert wird, wobei das platzierte Hülselement (2) das Dichtelement (3) dann bevorzugt axial einschließt.

7. Verwendung nach einem der vorstehenden Ansprüche, wobei das Hülselement (2), wenn es auf dem Rohr (5) und dem Dichtelement (3) platziert ist, das Dichtelement (3) axial einschließt.

8. Verwendung nach einem der vorstehenden Ansprüche, bei welcher das Anschlussstück (1) in ein Loch (45) in einer Wand (40) eines Gehäuses (41) eingesetzt wird.

9. Verwendung nach Anspruch 8, bei welcher das Hülselement (2) in dem Loch verrastet und damit axial formschlüssig und vorzugsweise auch verdrehsicher in dem Loch gehalten ist.

10. Verwendung nach Anspruch 8 oder 9 in Verbindung mit Anspruch 5 oder 6, bei welcher, wenn das Hülselement (2) in das Loch (45) eingesetzt ist, dessen Laibung ein Aufklappen des Hülselements (2) blockiert.

11. Verwendung nach einem der vorstehenden Ansprüche, bei welcher die Leitung (30) ebenfalls ein Rohr (5) ist, vorzugsweise ein Rohr (5) mit einer gewellten Außenwandfläche.

12. Verwendung nach einem der Ansprüche 1 bis 10, bei welcher die Leitung (30) ein Datenkabel ist, das sich in dem Rohr (5) erstreckt und in dem Dichtelement (3) aus dem Rohr (5) austritt.

13. Anschlussstückanordnung, die sich vorzugsweise aus einer Verwendung nach einem der vorstehenden Ansprüche ergibt, mit
einem Anschlussstück (1), welches
ein Hülselement (2) und
ein im Vergleich zu dem Hülselement (2) weicheres Dichtelement (3) aufweist,
wobei das Dichtelement (3) eine Öffnung (4) begrenzt und eine Tülle (3.1) bildet,
einem Rohr (5) und
einer Leitung (30)
bei welcher Anschlussstückanordnung das Rohr (5) und die Leitung (30), die einen im Vergleich zu dem Rohr (5) kleineren Außendurchmesser hat, über das Anschlussstück (1) zusammengesetzt sind,
wozu ein Ende (5.1) des Rohres (5) in die Öffnung (4) des Dichtelements (3) eingeschoben ist und die Leitung (30) in die Tülle (3.1) des Dichtelements (3) eingeschoben ist,
wobei das Hülselement (2) das Dichtelement (3), in dem das Ende (5.1) des Rohres (5) und die Leitung (30) angeordnet sind, in Richtungen senkrecht zu einer Längsachse (4.1) der Öffnung (4) nach außen einfasst.
